# EUROPÄISCHE PATENTANMELDUNG

(11) **EP 2 039 977 A2**
(43) Veröffentlichungstag der Anmeldung: **25.03.2009**
(21) Anmeldenummer: 08016079.9
(22) Anmeldetag: 12.09.2008
(51) Int. Cl.: F16N 13/02

(54) **Schmierpumpe**

(30) Priorität: 14.09.2007 DE 202007012900 U
(71) Anmelder: Atlas Copco Construction Tools GmbH, 45143 Essen (DE)
(72) Erfinder: Siemes, Heiko, 52080 Aachen (DE)
(74) Vertreter: Vomberg, Friedhelm

(57) **Zusammenfassung**

Die Erfindung betrifft eine Schmierpumpe mit einem Fettvorratsraum und einem Pumpmechanismus, der einen translatorisch bewegbaren Förderkolben aufweist. Erfindungsgemäß ist vorgesehen, dass die Achse des Fettvorratsraums im Wesentlichen parallel zur Bewegungsachse des Förderkolbens angeordnet ist.

## Beschreibung

Die Erfindung betrifft eine Schmierpumpe mit einem Fettvorratsraum und einem Pumpmechanismus, der einen translatorisch bewegbaren Kolben aufweist.

Schmierpumpen der oben genannten Art werden typischer Weise an hydraulisch betriebenen Hämmem, wie sie bspw. an Baggern angebaut und eingesetzt werden. Weiterhin findet die Schmierpumpe auch Anwendung bei anderen Anbaugeräten wie Zangen, Fräsen, Greifern oder bei der Schmierung von Gelenken solcher Anbaugeräte, wie bsw. Gabeln an Teleskopstaplern. Die Aufzählung der Anwendungsbeispiele ist nicht abschließend. Der Anwendungsbereich umfasst alle Anwendungen, bei denen eine Fettschmierung von Gerätekomponenten notwendig oder nützlich ist.

Werden Schmierpumpen der eingangs genannten Art an schweren Baugeräten eingesetzt, müssen die Pumpen robust und unempfindlich gegen alle Arten von Verschmutzung oder sonstigen Beeinträchtigungen ausgebildet sein. Insbesondere in engen Baustellenbereichen ist es weiterhin vorteilhaft Schmierpumpen möglichst klein und kompakt auszugestalten.

In der EP 1 643 123 A1 wird eine automatische Schmiereinrichtung vorgeschlagen, die ausgebildet und bestimmt ist zur Montage an einem mittels eines Hydraulik-Druckmediums antreibbarem Hydraulikwerkzeug als insbesondere lösbare Komponente einer Baumaschine, wie beispielsweise zur Montage an einem Hydraulikhammer eines Baggers. Die Schmiereinrichtung fördert von einem Schmierstoffreservoir den Schmierstoff über eine Schmierstoffleitung an eine oder mehrere Schmierstellen. Das Pumpenelement weist eine Schmierstoffpumpe auf, wobei das Pumpenelement über einen Exzenter zyklisch beaufschlagt wird. Bei der vorgeschlagenen Schmiereinrichtung ist die Längsachse des Fettvorratsraums senkrecht zur Bewegungsrichtung des Förderkolbens ausgerichtet.

Eine weitere Schmierpumpe der zuvor beschriebenen Art, die einen Fettvorratsraum und eine Pumpeinrichtung mit einem Förderkolben aufweist, wird in der

WO 2005/124093 vorgeschlagen. Nach den dargestellten Ausführungsformen ist auch hier die Längsachse des Fettvorratsraums senkrecht zu der Bewegungsrichtung des Förderkolbens angeordnet.

Nachteilig am oben genannten Stand der Technik ist, dass die senkrecht zueinander angeordnete Längsachse des Fettvorratsraums und des Förderkolbens eine ausladende und wenig Platz sparende Anordnung ist, wodurch der Einsatz von mit Schmierpumpen ausgestatteten Geräten in engen oder schwer zugänglichen Bereichen erheblich erschwert wird.

Es ist daher die Aufgabe der vorliegenden Erfindung eine Schmierpumpe zu schaffen, die in ihrer Bauart wesentlich kompakter und damit Platz sparender ist.

Diese Aufgabe wird dadurch gelöst, dass die Längsachse des Fettvorratsraums, der vorzugsweise zylindrisch ausgestaltet ist, im Wesentlichen parallel zur Bewegungsachse des Förderkolbens angeordnet ist. Eine derartige Ausgestaltung hat den Vorteil, dass die Schmierpumpe sowohl in der Breite als auch in der Länge wesentlich kompakter Ist, als Schmierpumpen, die nach dem Stand der Technik bekannt sind. Insbesondere ist es mit diesen Schmierpumpen möglich an schwer zugänglichen Bereichen auf Baustellen zu arbeiten, da die kleinere Bauart eine bessere Manövrierbarkeit des Baugerätes ermöglicht.

Nach einer weiteren Ausgestaltung der erfindungsgemäßen Schmierpumpe ist der Förderkolben über einen hydraulischen Antrieb verschiebbar, was den Vorteil liefert, dass die Schmierpumpe mit den an Baggern vorhandenen Hydrauliksystemen ver- bind- und betreibbar ist.

Ferner ist als vorteilhafte Ausgestaltung vorgesehen, dass der Fettvorratsraum auswechselbar und/oder wiederbefüllbar ausgestaltet ist, was im Einsatz auf der Baustelle eine erhebliche Zeitersparnis mit sich bringt. Darüber hinaus sind insbesondere wiederbefüllbare Fettvorratsraum auch wirtschaftlich interessant, da der Behälter nach dem Einsatz nicht neu angeschafft werden muss. Es ist zudem vorgesehen kleine Mengen an Fett über ein Schiermittel dem System mittels einer Handfettpresse zuzuführen.

Um den harten Bedingungen an das Material auf der Baustelle gerecht zu werden, ist weiterhin vorgesehen, dass das Pumpengehäuse aus einem metallischen Gusskörper besteht. Der metallische Gusskörper bietet Schutz gegen äußere Einflüsso, wie z.B. Schmutz oder Stöße.

Zur Verbesserung des Ansaugverhaltens der Schmierpumpe ist vorgesehen, dass das Fett durch eine äußere Kraft auf das Trennelement des Fettvorratsraums unter Druck gesetzt wird.

Weitere vorteilhafte Ausgestaltungen sowie die Funktionsweise der Schmierpumpe werden im Folgenden anhand der Figuren beschrieben, wobei
- Fig. 1: eine Schnittansicht der Schmierpumpe und
- Fig. 2: ein Schaltschema einer hydraulisch angetriebenen Schmierpumpe mit einer pneumatischen Vorspannung
zeigt.

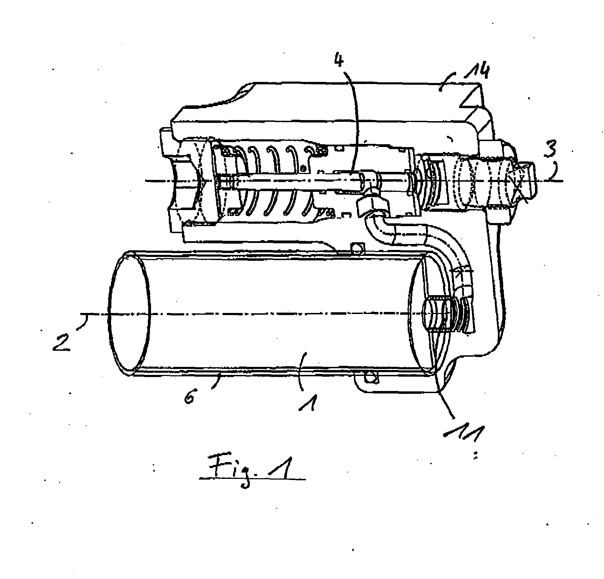

In Fig. 1 ist eine besondere Ausführungsform der erfindungsgemäßen Schmierpumpe dargestellt. Die Schmierpumpe weist einen Fettvorratsraum 1 auf, der sich innerhalb einer auswechselbaren Kartusche 6 befindet. Dargestellt ist ferner die Längsachse 2 der zylindrisch ausgestalteten Kartusche 6. Das Fett kann durch die Austrittsöffnung 11 in eine Zuführleitung befördert werden, die den Fettvorratsraum mit der Pumpeinrichtung verbindet, welche den Förderkolben 4 aufweist. Die Bewegungsachse 3 des Förderkolbens 4 ist ebenfalls dargestellt. Die gesamte Schmierpumpe ist in ein Gehäuse 14 integriert. Erfindungsgemäß ist die Bewegungsachse 3 des Förderkolbens 4 parallel zu der Längsachse des Fettvorratsraums 1 ausgerichtet; der Fettvorratsraum 1 und das Gehäuse 14 liegen nebeneinander.

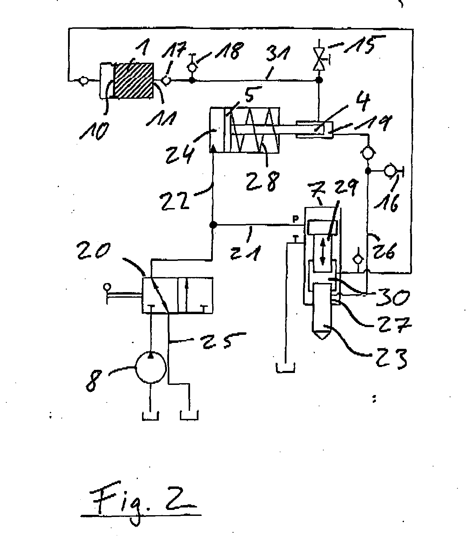

Das Schaltschema einer hydraulisch angetriebenen Schmierpumpe ist in Fig. 2 dargestellt. Das Drucköl zum Betrieb des Hammers 7 wird von einer auf einem Bagger angeordneten Pumpe 8 über ein vom Baggerfahrer zu betätigendes Schaltventil 20 und eine Zuleitung 21 zum Schlagwerk des Hydraulikhammers oder eines anderen Anbaugerätes geleitet, wenn das Schaltventil auf Durchlassstellung geschaltet wird. Gleichzeitig steht bei Druckbeaufschlagung des Hammers Drucköl in der Zulaufleitung 22 der Schmierpumpe an. Wenn Drucköl aus der Zulaufleitung 22 bzw. 21 auf den Hydraulikkolben 5 wirkt, wird der Hydraulikkolben 5 und der mit ihm verbundeno Förderkolben 4 verschoben. Fett wird aus dem Pumpenförderraum 19 über die Schmierleitung 26 zur Schmierstelle 27, die hier die Lagerung des Meißels 23 ist, gefördert. Wird der Hydraulikhammer ausgeschaltet und die Zulaufleitung 22 bzw. 21 entlastet, so wird der Förderkolben aufgrund einer Rückstellfeder 28 in seine Ruhestellung verschoben, Fett aus dem Vorratsraum 1 in den Pumpenraum 19 gesaugt und Öl aus der Pumpenantriebskammer 24 über die Zulaufleitung 22, das Schaltventil 20 und die Rücklaufleitung 25 verdrängt.

Der Fettvorratsraum 1 bzw. die Kartusche 6 welst einen Folgekolben 10 auf, der den Fettvorratsraum 1 entgegengesetzt zur Austrittsöffnung 11 abdichtet. Der Folgekolben 10 kann mechanisch, hydraulisch oder pneumatisch vorgespannt sein, so dass der Fettvorratsraum 1 unter einem höheren Druck als der Atmosphärendruck steht. Der pneumatische Druck kann durch die Bewegung des Hammerschlagkolbens 29 erzeugt werden, wenn sich der Kolben in Richtung des Meißels 23 bewegt und er in dem mit Luft gefülltem Schlagraum 30, in den die Oberseite des Meißels und die Unterseite des Kolbens hineinragen, Volumen verdrängt.

Die Pumpe weist ein Entlüftungsventil 15 auf, durch das Luft aus der Verbindungsleitung 31 für Fett, zwischen Fettvorratsraum 1 und Pumpenförderraum 19, austreten kann. Durch eine von außen auf den Folgekolben 10 aufgebrachte Kraft wird das in dem Fettvorratsraum, der Verbindungsleitung 31 und dem Pumpenförderraum19 anstehende Volumen unter Druck gesetzt und durch Öffnen des Entlüftungsventil 15 kann die in dem Volumen befindliche Luft aus dem System austreten.

Die Pumpe weist einen Schmiemippel 16 zum Anschluss einer manuellen Handfettpresse auf, so dass manuell Fett in die Schmierlcitung zwischen dem Pumpenförderraum und der Schmierstelle 27 gepumpt werden kann, sollte die Schmierpumpe nicht funktionieren oder der Fettvorratsraum 1 leer sein.

Die Pumpe weist im Pumpengehäuse 14 ein Rückschlagventil 17 und einen Füllschmiernippel 18 nahe der Austrittsöffnung 11 des Fettvorratsraumes 1 auf, wobei das Rückschlagventil zwischen Austrittsöffnung 11 und Füllschmiernippel 18 angeordnet ist und einen Fettfluss in Richtung des Fettvorratsraums 1 unterbindet.
Durch diese Anordnung kann das Volumen zwischen Fettvorratsraum 1 und Pumpenförderraum 19 über eine Handfettpresse mit Fett gefüllt werden, bzw. die in dem Fettvolumen enthaltene Luft in Richtung des Entlüftungsventil 15 oder des Pumpenförderraumes 19 verdrängt werden.

### Bezugszeichenliste

- 1: Fettvorratsraum
- 2: Längsachse des Fettvorratsraums
- 3: Bewegungsachse des Förderkolbens
- 4: Förderkolben
- 5: Hydraulikkolben
- 6: Kartusche
- 7: Hammer
- 8: Pumpe
- 10: Folgekolben
- 11: Austrittsöffnung
- 14: Pumpengehäuse
- 15: Entlüftungsventil
- 16: Schmiernippel
- 17: Rückschlagventil
- 18: Füllschmiernippel
- 19: Pumpenförderraum
- 20: Schaltventil
- 21: Zuleitung
- 22: Zulaufleitung
- 23: Meißel
- 24: Pumpenantriebskammer
- 25: Rücklaufleitung
- 26: Schmierleitung
- 27: Schmierstelle
- 28: Rückstellfeder
- 29: Hammerschlagkolben
- 30: Schlagraum
- 31: Verbindungsleitung

## Patentansprüche

1. Schmierpumpe mit einem Fettvorratsraum (1) und einem Pumpmechanlsmus, der einen translatorisch bewegbaren Förderkolben aufweist,
**dadurch gekennzeichnet, dass**
die Achse (2) des Fettvorratsraums (1) im Wesentlichen parallel zur Bewegungsachse (3) des Förderkolbens (4) angeordnet ist.

2. Schmierpumpe nach Anspruch 1, **dadurch gekennzeichnet, dass** der Förderkolben (4) über einen hydraulischen Antrieb verschiebbar ist.

3. Schmierpumpe nach Anspruch 2, **dadurch gekennzeichnet, dass** der hydraulische Antrieb ein translatorisch bewegbarer Kolben (5) ist.

4. Schmierpumpe nach einem der Ansprüche 1 bis 3, **dadurch gekennzeichnet, dass** der Fettvorratsraum (1) eine auswechselbare und/oder wiederbefüllbare Kartusche (6) ist, die vorzugsweise zylindrisch ausgestaltet ist.

5. Schmierpumpe nach einem der Ansprüche 1 bis 5, **dadurch gekennzeichnet, dass** durch den Förderkolben (5) des Pumpmechanismus ein Förderhub durch Druckbeaufschlagung des Hydrauliksystems zum Antrieb des Anbaugerätes ausführbar ist und bei Druckentlastung ein Saughub ausführbar ist.

6. Schmierpumpe nach einem der Ansprüche 1 bis 5, **dadurch gekennzeichnet, dass** durch den Förderkolben des Pumpmechanismus während der Druckbeaufschlagung des Hydrauliksystems wiederholt Förderhübe und anschließende Saughübe ausführbar sind, zumindest bis zur Druckentlastung des Hydrauliksystems.

7. Schmlerpumpe nach einem der Ansprüche 1 bis 6, **dadurch gekennzeichnet, dass** die Pumpe ein Entlüftungsventil (15) aufweist, durch das Luft aus der Verbindungsleitung für Fett, zwischen Fettvorratskammer und Förderraum austreten kann.

8. Schmierpumpe nach einem der Ansprüche 1 bis 7, **dadurch gekennzeichnet, dass** die Pumpe einen Schmiernippel (16) zum Anschluss einer Handfettpresse aufweist, so dass manuell Fett in die Förderleitung hinter dem Pumpmechanismus und der Schmierstelle pumpbar ist.

9. Schmierpumpe nach einem der Ansprüche 1 bis 8, **dadurch gekennzeichnet, dass** die Pumpe im Pumpengehäuse ein Rückschlagventil (17) und ein Füllschmiernippel (18) nahe der Austrittsöffnung (11) des Fettvorratsraumes (1) aufweist, wobei das Rückschlagventil zwischen Austrittsöffnung (11) und Füllschmiernippel (18) angeordnet ist, so dass ein Fettfluss in Richtung des Fettvorratsraumes unterbindbar ist, so dass der Raum zwischen Fettvorratsraum (1) und Pumpenförderer (19) über eine Handfettpresse mit Fett befüllbar ist.

10. Schmierpumpe nach einem der Ansprüche 1 bis 9, **dadurch gekennzeichnet, dass** das Pumpengehäuse (14) aus einem metallischem Gusskörper besteht.
